# EUROPEAN PATENT APPLICATION

(11) **EP 0 548 029 A1**
(43) Date of publication of application: **23.06.1993**
(21) Application number: 92830574.7
(22) Date of filing: 16.10.1992
(51) Int. Cl.: B29C 35/02

(54) **Method and apparatus for the determination and on-line control of the reactivity of masses of thermo-setting resins to be moulded**

(30) Priority: 21.11.1991 IT TO910895
(71) Applicant: FIAT AUTO S.p.A., I-10121 Torino (IT)
(72) Inventor: Da Re', Mario, I-10128 Torino (IT)
(74) Representative: Gerbino, Angelo

(57) **Abstract**

The apparatus is constituted by several components which operates to withdraw from a process apparatus (2) a sample (13) of the mass to be moulded cause cross linking of the sample (13), measure the value of a physical or chemical property of the sample influenced by the cross linking process, compare the measured value with a reference value, and correct at least one of the process parameters if there is a difference between the measured value and the reference value so as to cause the measured value to coincide substantially with the reference value.

## Description

The present invention relates to a method and apparatus forthe determination and on-line control of the reactivity of masses to be moulded of thermo-setting resins.

The process for preparation and moulding of such masses provides that the various components, namely resins, fillers, catalysers, activators, forming the so-called "mother paste" are first mixed together in a homogeneous manner. Then reinforcement fibres are, if necessary, added to this mixture and subsequently the moulding process itself takes place.

The object of the present invention is that of providing a method and apparatus of the type above indicated, which will allow possible deviations in the characteristics of masses to be moulded from the desired value to be corrected as soon as the various components have been mixed and before moulding, in such a way that this latter operation can be performed on material having constant characteristics and therefore not requiring particular adjustments.

This object is achieved thanks to a process of the type indicated above comprising the operations of:
withdrawing from the process apparatus a sample of the mass to be moulded,
causing cross linking of the said sample,
measuring the value of a chemical or physical property of the sample, the said value having been influenced by the cross linking process,
comparing the said measured value with a reference value, and
correcting at least one of the process parameters, if there is a difference between the measured value and the reference value so as to cause the measured value to coincide substantially with the reference value.

A further object of the present invention is constituted by apparatus of the type indicated above, comprising:
means adapted to withdraw from process apparatus a sample of the mass to be moulded,
means adapted to cause cross linking of the said sample,
means adapted to measure the value of a chemical or physical property of the sample, the said value having been influenced by the cross linking process,
means adapted to compare the said measured value with a reference value, and
means adapted to correct at least one of the process parameters if there is a difference between the measured value and the reference value so as to make the measured value coincide substantially with the reference value.

Advantages and characteristics of the present invention will become apparent from the following detailed description given with reference to the annexed drawing, provided purely by way of non-limitative example, in which apparatus according to the invention is schematically illustrated.

The reference numeral 2 generally indicates a mixing container into which the various components are introduced through supply ducts 4 the components being unsaturated polyester resin, polystyrene, catalyser, activator, fillers, necessary for the formation of the mother paste of a BMC thermo-setting resin.

From this container extends a continuous reflux duct 6 having a circulation pump 8, in which duct is formed a discharge aperture 10 provided with a shutter 12.

Below this aperture 10 is located a first, substantially horizontal conveyor belt 14 adapted to receive the samples of mother paste which fall from the aperture 10.

Downstream from the point at which the mother paste samples fall onto the first conveyor belt 14 there is disposed, parallel to and above this latter, a second conveyor belt 16 such that the samples 13 of mother paste are trapped between the two belts 14, 16.

A vertical press 18 is disposed orthogonally with respect to the longitudinal axis of the belts 14,16 with the upper and lower mould plates 20a and 20b disposed respectively above the belt 16 and below the belt 14.

The plates 20 are provided with a device for detecting the value of a chemical or physical property, influenced by the cross linking process which has taken place during moulding of the sample. Preferably the value of the dielectric constant is measured.

A process control computer 22 is connected by data transfer lines 24, 26 both to the press 18 and to the mixture container 2, by which the process parameters such as temperature, intensity of stirring and the ratio between the quantities of the various components supplied are controlled and adjusted.

The apparatus operates as follows.

At the expiry of a predetermined time samples 13 of mother paste are taken from the aperture 10 of the duct 6. Samples 13 fall onto the belt 14, are trapped between this and the belt 16 and then directed towards the press 18 where they are moulded, being subjected to a cross linking process.

After this operation the values of physical and chemical parameters of the mother paste vary, in particular that of the dielectric constant, which is detected by a suitable device supported by the mould plate 20. To this end it is important that the material of the belts 14, 16 will not disturb the measurements. In particular, it has been found convenient to use belts of mylar (Registered Trade mark of Dupont).

The measured values of the dielectric constant are transmitted to the process computer 22 and here compared with a reference value corresponding to that of a mother paste having the desired characteristics. If there is a difference between these two values the computer acts on at least one of the mixing process parameters in such a way as to eliminate the causes of this difference. Preferably, the ratios between the quantities of the various components in the mass to be moulded supplied to the mixing container 2 are varied. In this way the characteristic of the mass to be moulded are maintained within predetermined limits and the subsequent moulding operation can take place on a product having substantially standard characteristics, ensuring the constancy of the results obtained.

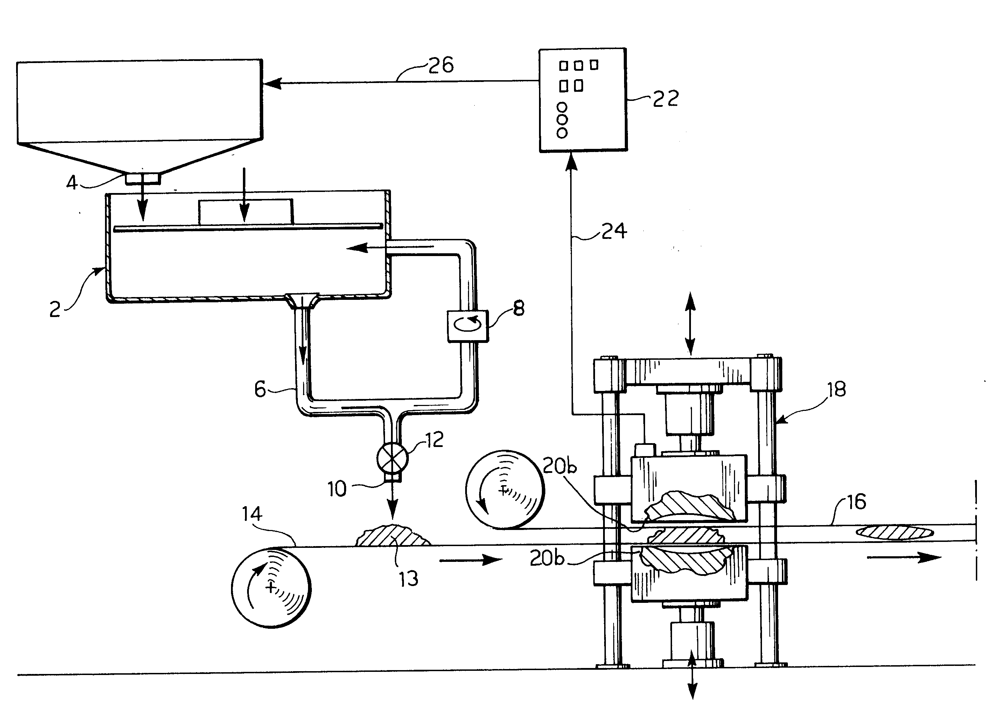

## Claims

1. A process for the determination and on-line control of the reactivity of masses to be moulded of thermo-setting resins, comprising the operations of:
withdrawing from a process apparatus (2) a sample (13) of the mass to be moulded,
causing cross linking of the said sample (13),
measuring the value of a physical or chemical property of the sample, the said value having been influenced by the cross linking process,
comparing the said measured value with a reference value, and
correcting at least one of the process parameters if there is a difference between the measured value and the reference value so as to cause the measured value substantially to coincide with the reference value.

2. A process according to Claim 1, characterised by the fact that the measured property is the value of the dielectric constant of the sample (13).

3. A process according to any preceding claim, characterised by the fact that the process parameter which is corrected is the ratio between the quantities of the various components of the mass to be moulded,

4. Apparatus for the determination and on-line control of the reactivity of masses to be moulded of thermo-setting resin, comprising:
means (6,10,14,16) adapted to withdraw from process apparatus (12) a sample (13) of the mass to be moulded,
means (18) adapted to cause cross linking of the said sample (13),
means adapted to measure the value of a physical or chemical property of the sample (13) the said value having been influenced by the cross linking process,
means (22) adapted to compare the said measured value with a reference value, and means (22) adapted to correct at least one of the process parameters if there is a difference between the measured value and the reference value so as to make the measured value coincide substantially with the reference value.
